# EUROPÄISCHE PATENTANMELDUNG

(11) **EP 2 824 400 A1**
(43) Veröffentlichungstag der Anmeldung: **14.01.2015**
(21) Anmeldenummer: 14175898.7
(22) Anmeldetag: 07.07.2014
(51) Int. Cl.: F24D 19/08, B01D 19/00, E04F 13/08, F15B 21/04, F16L 55/07, F16K 24/04, F24D 3/10

(54) **Bausatz zum Verkleiden und Verrohren von Sanitärräumen und diesen Bausatz nutzende Installationsanordnung**

(30) Priorität: 11.07.2013 DE 102013107337
(71) Anmelder: I.C.B. Innovations-Center-Bad GmbH & Co. KG, 33181 Bad Wünnenberg (DE)
(72) Erfinder:
(74) Vertreter: Wickord, Wiro

(57) **Zusammenfassung**

Die Erfindung betrifft einen Bausatz zum Verkleiden und Verrohren von Sanitärräumen mit einer Mehrzahl von werkseitig vorgefertigten Wandelementen, wobei die Wandelemente eine Trägerplatte und eine mit der Trägerplatte verbundene Dekorschicht umfassen und wobei in mindestens einem Wandelement in der Trägerplatte Installationsleitungen für die Warm- und/oder Kaltwasserführung und/oder Installationsleitungen für ein Heizungsmodul und/oder Elektroleitungen vorgesehen sind, welche sich über einen Teil der Höhe des mindestens einen Wandelements erstrecken, und mit mindestens einer den Installationsleitungen und/oder den Elektroleitungen zugeordneten Funktionsstelle, welche als eine Anschlussstelle oder ein Steuerelement für einen Wasserund/oder Stromverbraucher und/oder für das Heizmodul ausgebildet ist, wobei ein für den Anschluss an die Installationsleitung für das Heizmodul ausgebildetes Entlüftungsmodul vorgesehen ist, welches ein Gehäuse zur Aufnahme eines Heizfluids mit einer Öffnung und einen der Öffnung zugeordneten Verschlusskörper aufweist, welcher die Öffnung in einer ersten Betriebsposition desselben verschließt und in einer zweiten Betriebsposition freigibt, wobei der Verschlusskörper in dem Gehäuse derart gehalten ist und derart mit dem Heizfluid in Wirkverbindung steht, dass die Öffnung verschlossen wird, wenn ein Heizfluidfüllstand mindestens eine Sollfüllhöhe erreicht, und ansonsten die Öffnung freigegeben wird, sodass Schadfluid aus der Installationsleitung für das Heizmodul entweicht.

## Beschreibung

Die Erfindung betrifft einen Bausatz zum Verkleiden und Verrohren von Sanitärräumen mit einer Mehrzahl von werkseitig vorgefertigten Wandelementen, wobei die Wandelemente eine Trägerplatte und eine mit der Trägerplatte verbundene Dekorschicht umfassen und wobei in mindestens einem Wandelement in der Trägerplatte Installationsleitungen für die Warm- und/oder Kaltwasserführung und/oder Installationsleitungen für ein Heizungsmodul und/oder Elektroleitungen vorgesehen sind, welche sich über einen Teil der Höhe des mindestens einen Wandelements erstrecken, und mit mindestens einer den Installationsleitungen und/oder den Elektroleitungen zugeordneten Funktionsstelle, welche als eine Anschlussstelle oder ein Steuerelement für einen Wasser- und/oder Stromverbraucher und/oder für das Heizmodul ausgebildet ist.

Ferner betrifft die Erfindung eine den Bausatz umfassende Installationsanordnung.

Ein gattungsgemäßer Bausatz zum Verkleiden und Verrohren von Sanitärräumen sowie eine den Bausatz nutzende Installationsanordnung ist aus den deutschen Patentschriften DE 196 39 770 C2 und DE 10 2004 030 712 B1 der Anmelderin bekannt. Im Rahmen der Renovierung von Sanitärräumen bietet der Bausatz die Möglichkeit, notwendige Renovierungsarbeiten werksseitig vorzubereiten und die einzelnen, kundenspezifisch gefertigten Elemente des Bausatzes vor Ort auf der Baustelle innerhalb kurzer Zeit zu montieren. Letztlich gelingt die Modernisierung von Sanitärräumen auf diese Weise kostengünstig. Zugleich sind die Beeinträchtigungen für den Mieter beziehungsweise Eigentümer der von der Modernisierung betroffenen Wohnung aufgrund des kurzen zeitlichen Umfangs der vor Ort durchgeführten Arbeiten gering. Insbesondere steigt der Nutzen der Sanitärraummodernisierung weiter, wenn im Zuge der Modernisierung Vorkehrungen getroffen werden für einen dauerhaft wartungsfreien beziehungsweise wartungsarmen Betrieb der in dem Sanitärraum installierten Funktionselemente.

Aufgabe der Erfindung ist es insofern, im Rahmen einer Erweiterung des Bausatzes für die Verkleidung und Verrohrung von Sanitärräumen Vorkehrungen zum wartungsfreien beziehungsweise wartungsarmen Betrieb eines neu installierten Heizmoduls zu treffen.

Zur Lösung der Aufgabe ist die Erfindung in Verbindung mit dem Oberbegriff des Patentanspruchs 1 dadurch gekennzeichnet, dass ein für den Anschluss an die Installationsleitung für das Heizmodul ausgebildetes Entlüftungsmodul vorgesehen ist, welches ein Gehäuse zur Aufnahme eines Heizfluids mit einer Öffnung und einen der Öffnung zugeordneten Verschlusskörper aufweist, welcher die Öffnung in einer ersten Betriebsposition desselben verschließt und in einer zweiten Betriebsposition freigibt, wobei der Verschlusskörper in dem Gehäuse derart gehalten ist und derart mit dem Heizfluid in Wirkverbindung steht, dass die Öffnung verschlossen wird, wenn ein Heizfluidfüllstand mindestens eine Sollfüllhöhe erreicht, und ansonsten die Öffnung freigegeben wird, sodass Schadfluid aus der Installationsleitung für das Heizmodul entweicht.

Der besondere Vorteil der Erfindung besteht darin, dass ein von einem Heizfluid durchströmtes Heizmodul automatisiert entlüftet werden kann, sofern ein Schadfluid, beispielsweise Luft, sich in den Installationsleitungen beziehungsweise dem Heizmodul selbst befindet. Das Schadfluid kann hierbei durch eine Öffnung in dem Gehäuse des Entlüftungsmoduls entweichen. Ein der Öffnung zugeordneter Verschlusskörper des Heizmoduls gibt hierzu die Öffnung in einer zweiten Betriebsposition frei, während er sie einer ersten Betriebsposition verschließt. Das Heizfluid selbst wirkt hierbei regulativ, indem es mit dem Verschlusskörper in Wirkverbindung steht und die Betriebsposition des Entlüftungsmoduls bestimmt.

Insbesondere kann das im Rahmen der Renovierung als Teil des Bausatzes vorgesehene Heizmodul an eine ohnehin vorgesehene Zentralheizungsanlage angeschlossen werden. Beispielsweise kann bei einer Modernisierung einer Mehrzahl von Sanitärräumen in einem Mehrfamilienhaus das neu installierte Heizmodul in jedem einzelnen Sanitärraum einzeln entlüftet werden. Hierzu ist für jedes Heizmodul wenigstens ein separates Entlüftungsmoduls vorgesehen.

Kerngedanke der Erfindung ist es insofern, bereits bei der Planung der Sanitärraummodernisierung eine Heizungsanordnung mit einem Heizmodul und einem Entlüftungsmodul vorzusehen und werksseitig so vorzukonfektionieren, dass bei der Durchführung der Renovierungsarbeiten im Sanitärraum selbst die vorgefertigten Module montiert und über Installationsleitungen miteinander verbunden werden müssen. Die Heizungsanordnung kann insofern auch nach der Modernisierung des Bads dauerhaft wartungsfrei betrieben werden. Die Installationsarbeiten vor Ort können gleichwohl innerhalb kürzester Zeit und bei gleichbleibend hoher Qualität durchgeführt werden.

Nach einer bevorzugten Ausführungsform der Erfindung ist der Verschlusskörper des Entlüftungsmoduls nach Art eines Volumenänderungskörpers derart ausgebildet, dass in der ersten Betriebsposition einen Volumen des Verschlusskörpers größer ist als in der zweiten Betriebsposition. Vorteilhaft erfolgt eine Änderung der Betriebsposition des Entlüftungsmoduls automatisiert und ohne den Einsatz von Fremdenergie, wenn die Volumenänderung des Verschlusskörpers vom Heizfluid beziehungsweise vom Schadfluid selbst verursacht wird. Beispielsweise vergrößert sich das Volumen des Verschlusskörpers, wenn dieser mit dem Heizfluid getränkt ist. Der Verschlusskörper verschließt dann die Öffnung in dem Gehäuse des Heizmoduls und verhindert, dass das Heizfluid durch die Öffnung entweicht. Steht der Verschlusskörper nicht mit dem Heizfluid in Wirkverbindung, verringert sich das Volumen des Verschlusskörpers, und die Öffnung im Gehäuse des Entlüftungsmoduls wird freigegeben. Durch die freigegebene Öffnung kann Schadfluid entweichen, bis durch nachströmendes Heizfluid der Füllstand in dem Gehäuse des Entlüftungsmoduls soweit angestiegen ist, dass der Verschlusskörper wieder mit dem Heizfluid getränkt wird und infolge dessen sein Volumen zunimmt.

Nach einer Weiterbildung der Erfindung ist das Volumen des Verschlusskörpers in der ersten Betriebsposition um wenigstens 5 % größer als in der zweiten Betriebsposition. Vorteilhaft führt eine möglichst große Volumenänderung zwischen der ersten Betriebsposition und der zweiten Betriebsposition zu einer vorteilhaften Schaltcharakteristik und einer zügigen und sicheren Entlüftung der Installationsleitung für das Heizmodul sowie des Heizmoduls selbst.

Zur Lösung der Aufgabe umfasst die Installationsanordnung als Teil des Bausatzes zum Verkleiden und Verrohren von Sanitärräumen ein Entlüftungsmodul nach einem der Ansprüche 1 bis 4, wobei das Entlüftungsmodul an einer Raumdecke des Sanitärraums montiert ist derart, dass die Öffnung in dem Gehäuse des Entlüftungsmoduls der Raumdecke zugewandt ist.

Der besondere Vorteil der Erfindung besteht darin, dass das Entlüftungsmodul durch die Montage an der Raumdecke zum einen in einem oberen Bereich des Heizfluidkreislaufs installiert ist mit der Folge, dass Luft als Schadfluid im Heizfluidkreislauf sich in dem Gehäuse des Entlüftungsmoduls sammelt und über die Öffnung entweichen kann. Zum anderen ist die Installation des Entlüftungsmoduls in dem Heizfluidkreislauf einfach, wenn das Entlüftungsmodul an der Raumdecke montiert ist und in den Wandelementen vorgesehene Installationsleitungen für das Heizmodul ebenfalls im Bereich der Raumdecke aus dem Wandmodul herausgeführt werden. Die Installationsleitungen können dann beispielsweise entlang der Raumdecke geführt und mittels einer Winkelabdeckung oder einer abgehangenen Zwischendecke verkleidet werden. Insofern kann die Modernisierung mit wenig Aufwand kostengünstig und innerhalb kurzer Zeit durchgeführt werden. Grundsätzlich sind die Montage des Entlüftungsmoduls an der Decke und die Orientierung der Öffnung in Richtung der Decke vorteilhaft, solange das Schadfluid eine geringere Dichte aufweist als das Heizfluid.

Nach einer bevorzugten Ausführungsform der Erfindung umfassen die Installationsleitungen für das Heizmodul eine Zulaufleitung zum Zuführen des Heizfluids zu dem Heizmodul und eine Rücklaufleitung zum Abführen des Heizfluids von dem Heizmodul. Das Entlüftungsmodul kann hierbei entweder alleine der Zulaufleitung oder alleine der Rücklaufleitung zugeordnet sein, oder es können zwei Entlüftungsmodule vorgesehen sein, die in der Zulaufleitung und in der Rücklaufleitung vorgesehen sind. Vorteilhaft ergibt sich durch das variable Vorsehen des Entlüftungsmoduls in der Zulaufleitung beziehungsweise der Rücklaufleitung ein hohes Maß an Flexibilität. Insbesondere das Vorsehen von zwei Entlüftungsmodulen ist hierbei vorteilhaft, um das Schadfluid sowohl aus der Zulaufleitung als auch aus der Rücklaufleitung bedarfsgerecht herausführen zu können. Beispielsweise sind die Entlüftungsmodule hierbei baugleich ausgeführt und/oder auf einem gleichen Höhenniveau vorgesehen.

Nach einer Weiterbildung der Erfindung sind die Wandelemente an den Seitenwänden des Sanitärraums festgelegt. Die Installationsleitungen für das Heizmodul sind an einer der Raumdecke zugewandten Stirnseite des Wandmoduls oder benachbart zu der Raumdecke über die Dekorseite in das Wandelement geführt. In dem Wandelement erstrecken sich die Installationsleitungen vertikal bis zu der Anschlussstelle für das Heizmodul. Vorteilhaft ist eine Verkleidung beziehungsweise verdeckte Führung der Installationsleitungen auch außerhalb des Wandelements in einfacher Weise möglich, wenn sie stirnseitig oder benachbart zu der Raumdecke im Bereich der Dekorschicht in das Wandelement geführt werden. Der vertikale Verlauf der Installationsleitungen in dem Wandelement erleichtert ihr Auffinden trotz der verdeckten Führung. Allein die Position der Anschlussstellen erlaubt dann Rückschlüsse auf die Lage und Orientierung der Installationsleitungen. Außerhalb des Wandelements können die Installationsleitung und das Entlüftungsmodul beispielsweise mit einer Winkelverkleidung abgedeckt oder in einem Kabelkanal geführt werden.

Nach einer Weiterbildung der Erfindung ist das wenigstens eine Entlüftungsmodul zwischen der Raumdecke einerseits und einer im Wesentlichen parallel zu der Raumdecke erstreckten Zwischendecke vorgesehen. An der Zwischendecke ist eine wiederverschließbare Ausnehmung vorgesehen derart, dass nach dem Öffnen der Ausnehmung das Entlüftungsmodul durch die Ausnehmung hindurch zugänglich ist. Vorteilhaft vereinfacht sich ein Zugriff auf das Lüftungsmodul beziehungsweise ein Austausch des Lüftungsmoduls durch das Vorsehen der Reversieröffnung in der Zwischendecke. Insbesondere können das Lüftungsmodul und die zugeordnete Reversieröffnung türnah vorgesehen sein, da der türnahe Bereich üblicherweise dauerhaft gut zugänglich ist und nicht durch Sanitärobjekte wie Waschtisch oder Toilette, durch Zusatzgeräte wie Waschmaschine oder Trockner, oder durch bewegliche Einrichtungsgegenstände wie einen Wäschekorb versperrt ist.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details des Bausatzes gelten selbstverständlich auch im Zusammenhang mit der erfindungsgemäßen Installationsanordnung und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Figur 1: eine erste Ausführungsform einer erfindungsgemäßen Installationsanordnung mit einem Entlüftungsmodul,
- Figur 2: das Entlüftungsmodul in einer ersten Betriebsstellung,
- Figur 3: das Entlüftungsmodul in einer zweiten Betriebsstellung und
- Figur 4: ein zweites Ausführungsbeispiel der erfindungsgemäßen Installationsanordnung.

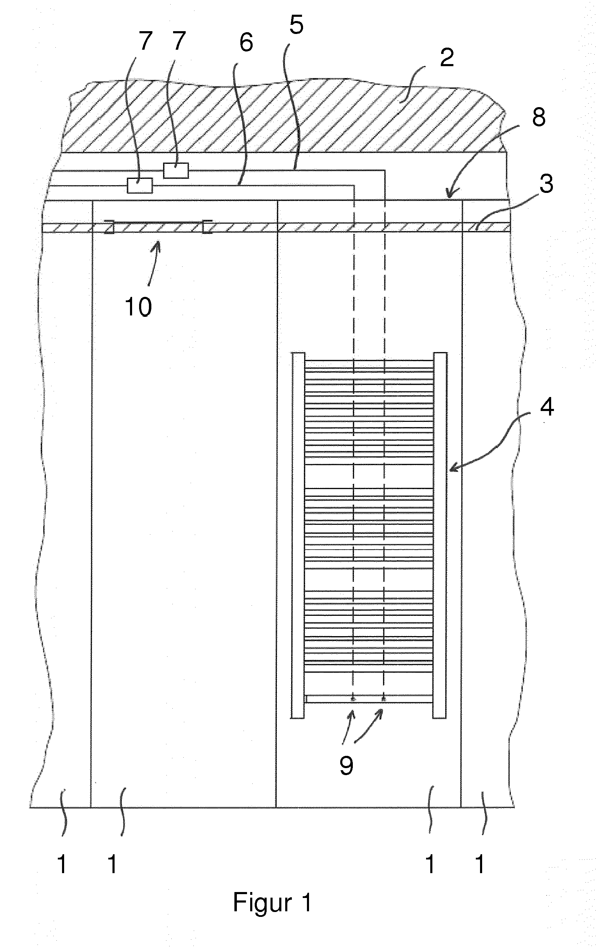

Eine erfindungsgemäße Installationsanordnung gemäß Figur 1 weist als wesentliche Bestandteile eines Bausatzes zum Verkleiden und Verrohren von Sanitärräumen eine Mehrzahl von Wandelementen 1, eine unterhalb einer Raumdecke 2 im Wesentlichen parallel zur Raumdecke 2 erstreckte Zwischendecke 3, ein an einem Wandelement 1 gehaltenes Heizmodul 4, eine von einem Heizfluid 12 durchflossene Zulaufleitung 5 für das Heizmodul 4 sowie eine Rücklaufleitung 6 für das Heizfluid 12 und zwei den Leitungen 5, 6 zugeordnete Entlüftungsmodule 7 auf. Exemplarisch sind die Zulaufleitung 5 und die Rücklaufleitung 6 über eine Stirnseite 8 in das Wandelement 1 geführt.

In dem Wandelement 1 erstrecken sich die Zulaufleitung 5 und die Rücklaufleitung 6 im Wesentlichen vertikal bis zu einer für den Anschluss des Heizmoduls 4 ausgebildeten Anschlussstelle 9. Die Zulaufleitung 5 und die Rücklaufleitung 6 sind außerhalb des Wandelements 1 im Wesentlichen horizontal und parallel zur Raumdecke 2 zwischen der Raumdecke 2 und der Zwischendecke 3 geführt. Das Entlüftungsmodul 7 ist in dem horizontalen Leitungsabschnitt der Zulaufleitung 5 und der Rücklaufleitung 6 vorgesehen.

Im Bereich des Entlüftungsmoduls 7 ist in der Zwischendecke 3 eine wiederverschließbare Ausnehmung 10 nach Art einer Reversieröffnung gebildet. Durch die Reversieröffnung 10 kann auch nach der Installation der Zwischendecke 3 ein Wartungszugriff auf die Entlüftungsmodule 7 oder ein Austausch derselben in einfacher Weise durchgeführt werden.

Das Heizmodul 4 ist exemplarisch wandgehalten und nach Art eines Handtuchheizkörpers 4 realisiert. Grundsätzlich kann auch jedes andere von einem Heizfluid 12 durchflossene Heizmodul 4 verbaut sein.
Gleiche Bauteile und Bauteilfunktionen sind durch gleiche Bezugszeichen gekennzeichnet.

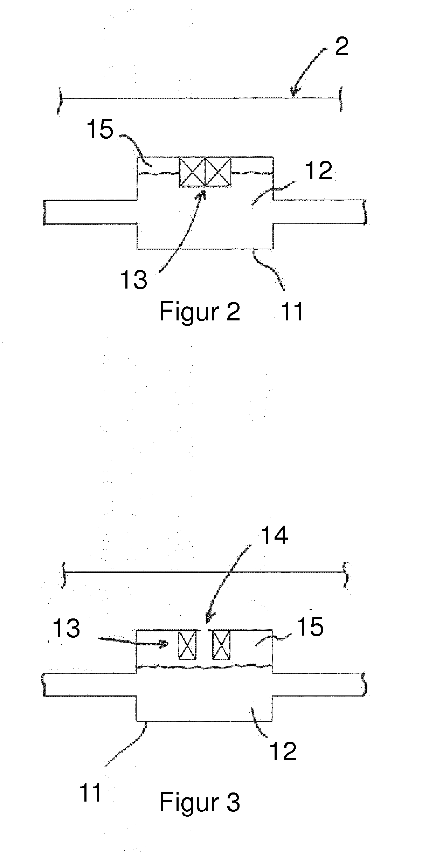

Die Figuren 2 und 3 zeigen das Entlüftungsmodul 7 schematisch in einer ersten Betriebsposition und in einer zweiten Betriebsposition. In der ersten Betriebsposition gemäß Figur 2 ist ein Gehäuse 11 des Entlüftungsmoduls 7 derart mit einem Heizfluid 12 gefüllt, dass ein in dem Gehäuse 11 festgelegter Verschlusskörper 13 mit dem Heizfluid 12 getränkt ist. Demgegenüber ist das Flüssigkeitsniveau des Heizfluids 12 in der zweiten Betriebsposition des Entlüftungsmoduls 7 nach Figur 3 gesunken. Der Verschlusskörper 13 ist nicht mit dem Heizfluid 12 getränkt.

In der ersten Betriebsposition des Entlüftungsmoduls 7 hat der Verschlusskörper 13, welcher exemplarisch zweigeteilt ausgeführt ist, ein größeres Volumen als in der zweiten Betriebsposition. Infolge des größeren Volumens in der ersten Betriebsposition verschließt der Verschlusskörper 13 eine Öffnung 14 des Gehäuses 11, während die Öffnung 14 in der zweiten Betriebsposition freigegeben ist. Insofern kann durch die Öffnung 14 in der zweiten Betriebsposition ein in dem Gehäuse 11 vorhandenes Schadfluid 15 entweichen. Durch das Entweichen des Schadfluids 15 aus dem Gehäuse 11 steigt das Niveau des Heizfluids 12 in dem Gehäuse 11. Sobald der Verschlusskörper 13 mit dem Heizfluid 12 in Kontakt kommt, wird der Verschlusskörper 13 mit dem Heizfluid 12 getränkt und vergrößert sein Volumen. Infolge der Volumenvergrößerung wird die Öffnung 14 des Gehäuses 11 verschlossen. Das Entlüftungsmodul 7 ist dann wieder in seiner ersten Betriebsposition. Die Öffnung 14 ist hierbei oberhalb der Installationsleitung 5, 6 vorgesehen und der Raumdecke 2 zugeordnet.

Wie dargestellt erfolgt die Entlüftung des durch das Heizmodul 4, die Zulaufleitung 5 und die Rücklaufleitung 6 gebildeten Heizkreislaufs selbsttätig. Das Entlüftungsmodul 7 ist insofern als rein passives Entlüftungsmodul 7 ausgebildet, welches für den Betrieb beziehungsweise die Entlüftung keine Hilfsenergie und keiner separater Sensorik bedarf. Die Entlüftung erfolgt rein passiv und zuverlässig.

Das Vorsehen des zweigeteilten Verschlusskörpers 13 ist lediglich exemplarisch und dient insbesondere der Verdeutlichung der prinzipiellen Funktionsweise. Grundsätzlich kann der Verschlusskörper 13 eine nahezu beliebige Geometrie aufweisen und beispielsweise ringförmig, quaderförmig oder dergleichen ausgebildet sein. Insofern ist auch ein einteilig ausgeführter Verschlusskörper 13 funktional darstellbar. Entscheidend ist allein, dass die Öffnung 14 in der ersten Betriebsposition verschlossen und in der zweiten Betriebsposition freigegeben ist, beispielsweise infolge einer Volumenänderung des Verschlusskörpers 13.

Die Geometrie des Entlüftungsmoduls 7 begünstigt die Ausscheidung des Schadfluids 15 durch einen Querschnittsübergang im Verbindungsbereich von Leitungen 5, 6 und Gehäuse 11. In dem Gehäuse 11 des Entlüftungsmoduls 7 reduziert sich die Geschwindigkeit des Fluids aufgrund der Querschnittsvergrößerung. Insbesondere kann die Querschnittsvergrößerung schlagartig erfolgen, sodass infolge der resultierenden Turbulenzen das Schadfluid 15 von dem Heizfluid 12 getrennt wird und sich im öffnungsnahen Bereich sammelt. Beispielsweise kann das Gehäuse 11 derart ausgestaltet sein, dass sich in das Gehäuse 11 eine Rotationsströmung ausbildet und infolge dessen das Ausscheiden des Schadfluids 15 weiter begünstigt wird.

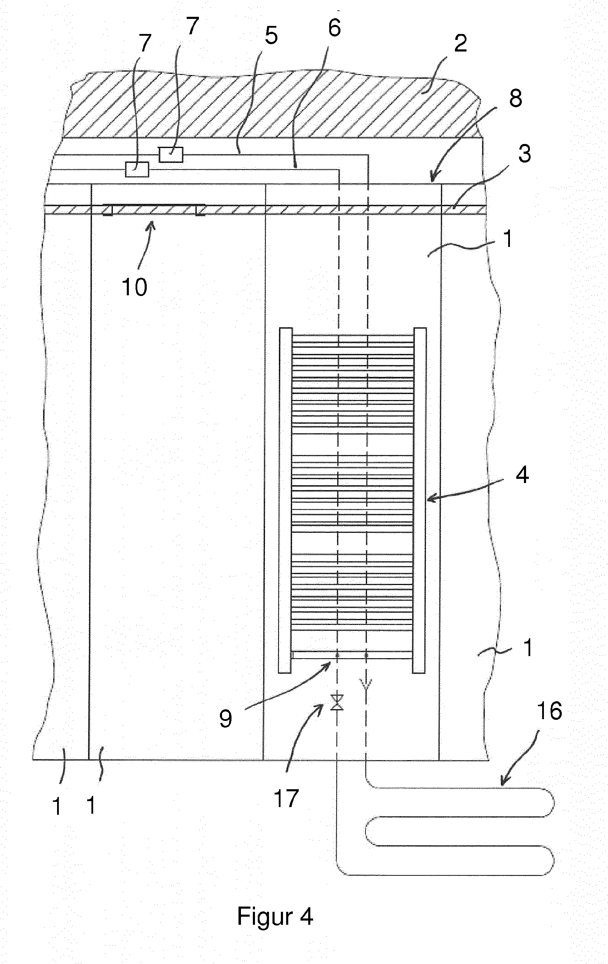

Nach einem zweiten Ausführungsbeispiel der Erfindung gemäß Figur 4 kann zusätzlich zu dem Heizmodul 4 eine Fußbodenheizung 16 über die Zulaufleitung 5 und die Rücklaufleitung 6 angeschlossen sein. Die Entlüftungsmodule 7 dienen insofern gleichzeitig zur Entlüftung des Heizmoduls 4 und der Fußbodenheizung 16. Beispielsweise kann an der Rücklaufleitung 6 ein Rücklauftemperaturbegrenzungsventil 17 vorgesehen sein. Ebenso kann vorgesehen sein, den Volumenstrom beziehungsweise die Heizleistung der Fußbodenheizung 16 beziehungsweise des Heizmoduls 4 über ein gemeinsames Thermostat zu bestimmen.

## Patentansprüche

1. Bausatz zum Verkleiden und Verrohren von Sanitärräumen mit einer Mehrzahl von werkseitig vorgefertigten Wandelementen (1), wobei die Wandelemente (1) eine Trägerplatte und eine mit der Trägerplatte verbundene Dekorschicht umfassen und wobei in mindestens einem Wandelement (1) in der Trägerplatte Installationsleitungen (5, 6) für die Warm- und/oder Kaltwasserführung und/oder Installationsleitungen (5, 6) für ein Heizungsmodul (4) und/oder Elektroleitungen vorgesehen sind, welche sich über einen Teil der Höhe des mindestens einen Wandelements (1) erstrecken, und mit mindestens einer den Installationsleitungen (5, 6) und/oder den Elektroleitungen zugeordneten Funktionsstelle (9), welche als eine Anschlussstelle (9) oder ein Steuerelement für einen Wasser- und/oder Stromverbraucher und/oder für das Heizmodul (4) ausgebildet ist, **dadurch gekennzeichnet, dass** ein für den Anschluss an die Installationsleitung (5, 6) für das Heizmodul (4) ausgebildetes Entlüftungsmodul (7) vorgesehen ist, welches ein Gehäuse (11) zur Aufnahme eines Heizfluids (12) mit einer Öffnung (14) und einen der Öffnung (14) zugeordneten Verschlusskörper (13) aufweist, welcher die Öffnung (14) in einer ersten Betriebsposition desselben verschließt und in einer zweiten Betriebsposition freigibt, wobei der Verschlusskörper (13) in dem Gehäuse (11) derart gehalten ist und derart mit dem Heizfluid (12) in Wirkverbindung steht, dass die Öffnung (14) verschlossen wird, wenn ein Heizfluidfüllstand mindestens eine Sollfüllhöhe erreicht, und ansonsten die Öffnung (14) freigegeben wird, sodass Schadfluid (15) aus der Installationsleitung (5, 6) für das Heizmodul (4) entweicht.

2. Bausatz nach Anspruch 1, **dadurch gekennzeichnet, dass** der Verschlusskörper (13) als ein Volumenänderungskörper (13) ausgebildet ist derart, dass in der ersten Betriebsposition ein Volumen des Verschlusskörpers (13) größer ist als in der zweiten Betriebsposition.

3. Bausatz nach Anspruch 1 oder 2, **dadurch gekennzeichnet, dass** der Verschlusskörper (13) in der ersten Betriebsposition mit dem Heizfluid (12) getränkt ist.

4. Bausatz nach einem der Ansprüche 1 bis 3, **dadurch gekennzeichnet, dass** das Volumen des Verschlusskörpers (13) in der ersten Betriebsposition um wenigstens 5 % größer ist als in der zweiten Betriebsposition.

5. Installationsanordnung umfassend einen Bausatz zum Verkleiden und Verrohren von Sanitärräumen mit einem Entlüftungsmodul (7) nach einem der Ansprüche 1 bis 4, wobei das Entlüftungsmodul (7) an einer Raumdecke (2) des Sanitärraums montiert ist derart, dass die Öffnung (14) in dem Gehäuse (11) des Entlüftungsmoduls (7) der Raumdecke (2) zugewandt ist.

6. Installationsanordnung nach Anspruch 5, **dadurch gekennzeichnet, dass** die Installationsleitungen (5, 6) für das Heizmodul (4) eine Zulaufleitung (5) zum Zuführen des Heizfluids (12) zu dem Heizmodul (4) und eine Rücklaufleitung (6) zum Abführen des Heizfluids (12) von dem Heizmodul (4) umfassen, wobei ein erstes Entlüftungsmodul (7) der Zulaufleitung (5) und/oder ein zweites Entlüftungsmodul (7) der Rücklaufleitung (6) zugeordnet sind.

7. Installationsanordnung nach Anspruch 5 oder 6, **dadurch gekennzeichnet, dass** die Öffnung (14) in dem Gehäuse (11) des an der Raumdecke (2) montierten Entlüftungsmoduls (7) oberhalb der Installationsleitungen (5, 6) für das Heizmodul (4) vorgesehen ist.

8. Installationsanordnung nach einem der Ansprüche 5 bis 7, **dadurch gekennzeichnet, dass** die Wandelemente (1) an Seitenwänden des Sanitärraums festgelegt sind, dass die Installationsleitungen (5, 6) für das Heizmodul (4) an einer der Raumdecke (2) zugewandten Stirnseite (8) des Wandelements (1) oder benachbart zu der Raumdecke (2) über die Dekorschicht in das Wandelement (1) geführt sind, an dem das Heizmodul (4) gehalten ist, und dass sich die Installationsleitungen von der Stirnseite (8) vertikal bis zu der als Anschlussstelle (9) für das Heizmodul (4) ausgebildeten Funktionsstelle (9) erstrecken.

9. Installationsanordnung nach einem der Ansprüche 5 bis 8, **dadurch gekennzeichnet, dass** das Entlüftungsmodul (7) zwischen der Raumdecke (2) einerseits und einer im Wesentlichen parallel zu der Raumdecke (2) und unterhalb derselben erstreckten, als Verblendung dienenden Zwischendecke (3) vorgesehen ist.

10. Installationsanordnung nach einem der Ansprüche 5 bis 9, **dadurch gekennzeichnet, dass** an der Zwischendecke (3) eine wiederverschließbare Ausnehmung (10) vorgesehen ist derart, dass nach dem Öffnen (14) der Ausnehmung (10) durch die Ausnehmung (10) hindurch das Entlüftungsmodul (7) zugänglich ist.
